# DEMANDE DE BREVET EUROPEEN

(11) **EP 0 870 971 A1**
(43) Date de publication de la demande: **14.10.1998**
(21) Numéro de dépôt: 97810215.0
(22) Date de dépôt: 11.04.1997
(51) Int. Cl.: F16L 55/165, F16L 1/06

(54) **Dispositif de tirage d'un câble de traction dans une canalisation souterraine**

(71) Demandeur: PLUMETTAZ SA, 1880 Bex (CH)
(72) Inventeur: Wiederkehr, Walter, 1882 Gryon (CH); Plumettaz, Gérard, 1880 Bex (CH)
(74) Mandataire: BOVARD AG - Patentanwälte

(57) **Abrégé**

Le dispositif de tirage d'un câble (13) dans une canalisation souterraine (21) est constitué notamment d'un châssis (10) comportant un étrier de fixation (18) d'une poutre (3) munie à son extrémité d'une poulie de renvoi (30). De par la conformation de l'étrier de fixation (18), les efforts de traction sont reportés entièrement sur la poutre et le châssis, faisant que les moyens d'amarrage au sol (11) du dispositif peuvent être minimisés.

Une telle construction permet facilement une mis en biais de la poutre lors d'un excentrage de la conduite.

Le dispositif peut aussi facilement être introduit à l'intérieur d'une chambre de câbles pour opérer.

## Description

La présente invention concerne le domaine du tirage de câbles de traction, notamment le tirage de câbles de traction dans des conduites souterraines.

Vu le coût et les inconvénients apportés par des travaux de génie civil étendus le long d'une foule lorsqu'on désire intervenir sur une conduite existante, notamment pour la remplacer, des moyens sont connus, comme par exemple des interventions uniquement à proximité des regards de la conduite, permettant de diminuer sensiblement aussi bien les coûts que les inconvénients de tels chantiers.

En général l'intervention se fait entre deux regards, disposés au niveau du terrain et aux deux extrémités de la conduite sur laquelle on doit intervenir, un premier regard, le regard d'entrée étant destiné à introduire les objets ou outils nécessaires à l'intervention, alors que le deuxième regard, le regard de sortie est généralement équipé d'un treuil ou autre moyen de traction chargé de tirer au moyen d'un câble, tout au long de la conduite, l'objet ou l'outil nécessaire à l'intervention. Selon l'intervention pratiquée, notamment lorsque l'outil est un marteau pneumatique chargé de faire éclater la conduite pour son remplacement, la force de traction peut être considérable, jusqu'à 200 kN ou plus.

Pour de tels efforts de traction, des précautions particulières sont à prendre au niveau du treuil, notamment pour sa stabilité et son arrimage sur le regard de sortie ou à l'extrémité de la conduite. Une première solution a consisté à créer une excavation importante dans les alentours du regard de sortie afin d'y introduire le treuil, généralement monté sur une remorque, afin d'amener l'axe d'entrée du câble sur le tambour en face de l'extrémité de la conduite. Cette solution est relativement onéreuse de par le coût de l'excavation nécessaire. Ensuite on a conservé le treuil en surface et installé les renvois nécessaires, au moyen de poulies indépendantes, de manière à guider le câble de traction depuis l'extrémité de la conduite jusqu'au tambour. Si cette solution peut être avantageuse lorsqu'on a affaire à de faibles efforts de traction, elle n'est pas du tout adaptée dans le cas considéré ici vu les importants amarrages nécessaires, tant du treuil que des poules. Une amélioration au procédé précédent a consisté à relier la poulie de renvoi disposée directement en face de l'extrémité de la conduite au châssis du treuil par une poutre métallique résistante de manière à absorber l'effort vertical entre ces deux objets. Jusqu'à présent les solutions de ce type proposées consistaient à relier la poutre au châssis du treuil par des moyens de fixation détachables ou orientables, ce qui limitait les efforts pouvant être transmis de la poutre au châssis.

Un premier but de l'invention est donc de proposer un dispositif de traction d'un câble ne rencontrant pas les inconvénients des dispositifs connus, et dont les moyens de fixation de la poutre au châssis permettent d'absorber les efforts importants considérés ici.

Vu que très souvent l'axe de la conduite est décalé relativement à l'axe vertical de la chambre, respectivement relativement au centre du regard, il est nécessaire de disposer la poutre en biais afin de compenser ce décalage. Une fixation faible entre la poutre et le châssis ne peut donc absorber l'effort de torsion qui lui est appliqué.

Un deuxième but de l'invention est de proposer un dispositif comme ci-dessus ayant la possibilité de travailler avec la poutre disposée de biais relativement à un axe vertical.

Vu que les efforts de traction peuvent être supportés essentiellement par la poutre, il n'est plus nécessaire que le dispositif de traction soit lourd et encombrant; en conséquence il peut être suffisamment compact pour pouvoir être disposé au fond de la chambre, directement en face de l'extrémité de la conduite.

Un troisième but de l'invention est donc de proposer un dispositif comme ci-dessus pouvant être disposé au fond d'une chambre.

Le premier but de l'invention est obtenu par un dispositif de traction comportant les caractéristiques mentionnées dans la partie caractérisante de la revendication 1, alors que les autres buts ainsi que des variantes sont obtenus par des dispositifs comme décrits dans les revendications dépendantes.

La description qui suit d'une forme préférentielle d'un dispositif selon l'invention est à considérer en regard du dessin annexé comportant les figures où:
la figure 1 est une vue en perspective montrant le dispositif selon l'invention dans une première position de travail, et
la figure 2 montre le même dispositif adapté pour une deuxième position de travail.

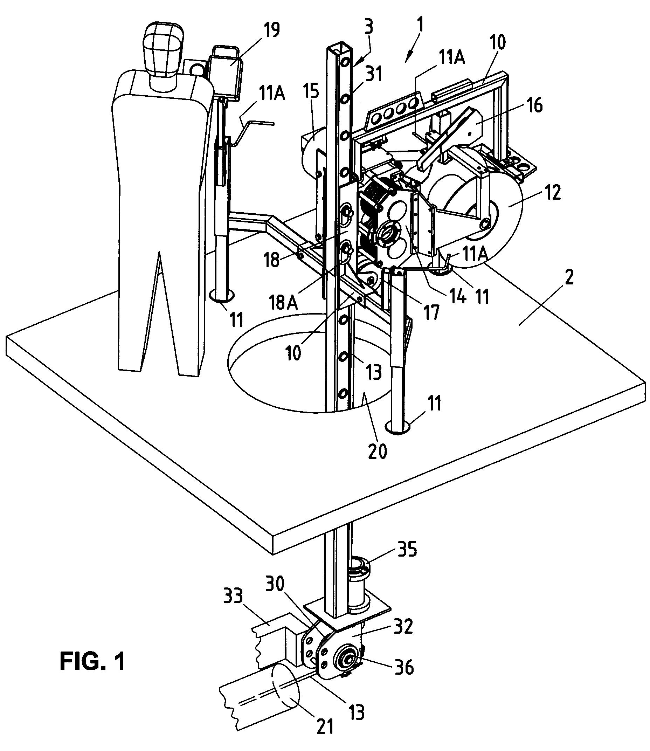

Le dispositif de tirage 1 de la figure 1 est disposé au-dessus de la surface 2 du sol, à proximité d'un regard 20 d'une chambre dans laquelle débouche une conduite 21 disposée au-dessous de la surface du sol 2. Un câble 13 est à tirer à travers la conduite 21. Le dispositif 1 est constitué d'un châssis 10, reposant sur trois pieds 11. Il comporte en outre un tambour 12 autour duquel le câble à tirer 13 sera enroulé ainsi qu'un cabestan 14, de technique connue, chargé d'appliquer l'effort de traction au câble 13. Le tambour 12 ainsi que le cabestan 14 sont entraînés en rotation par des moyens connus, par exemple par un ou plusieurs moteurs hydrauliques 15, d'autres types de moyens d'entraînement pouvant aussi être envisagés selon les besoins. Un premier galet de guidage 16 assure le passage du câble entre le cabestan 14 et le tambour 12. Les pieds 11 et leurs supports peuvent être décrochés ou démontés du châssis 10 pour une raison qui sera expliquée plus bas.

Une poutre 3, disposée sensiblement verticalement, permet d'absorber l'effort essentiellement vertical de traction du câble 13. A cet effet, l'extrémité inférieure de la poutre 3 est munie d'une première poulie de renvoi 30, transformant le mouvement généralement horizontal du câble 13 dans la conduite 21 en un mouvement essentiellement vertical le long de la poutre 3. Une deuxième poule de guidage 17 disposée sur le châssis 10, en face du cabestan 14 guide alors le câble 13 sur l'entrée du cabestan 14. Le châssis 10 comporte un étrier de fixation 18, en forme de U dans cette forme d'exécution, fixé rigidement au châssis 10 et faisant intégralement partie dudit châssis. Une portion de longueur de la poutre 3 est disposée à l'intérieur de l'étrier 18. La poutre 3 comprend une série de trous transversaux 31, régulièrement espacés, au moins deux trous correspondants étant aussi réalisés sur les deux faces latérales de l'étrier 18. Ainsi, en introduisant une ou deux goupilles 18A à travers les trous 31 de la poutre 3 alignés sur les trous de l'étrier 18, il est possible de relier fermement la poutre 3 au châssis 10. Le positionnement de la poulie de renvoi 30 en face de la conduite 21 est obtenu premièrement en choisissant une poutre 3 de longueur adaptée, puis en établissant un premier réglage grossier en choisissant les trous 31 permettant de rapprocher au mieux la poule 30 de la conduite 21 et enfin en agissant sur les moyens de réglage de hauteur 11A des pieds 11 du châssis 10. Dans le cas représenté, ces moyens de réglage de hauteur sont constitués de manivelles 11A agissant de manière connue pour régler la hauteur des pieds 11. D'autres moyens de régage de hauteur, par exemple à crémaillère, pneumatiques ou hydrauliques peuvent être envisagés.

On remarque sur la figure que la poulie de renvoi 30 est disposée à l'intérieur d'un deuxième étrier 32, des trous de fixation étant prévus sur les deux faces latérales dudit étrier. Ces trous de fixation permettent de fixer des moyens d'appui 33, un seul desdits moyens d'appui étant représenté, venant s'appuyer contre une surface stable entourant la conduite 21. Les moyens d'appui 33, reliés à l'étrier 32 permettent donc d'absorber l'effort longitudinal, généralement horizontal, de traction sur le câble 21. Puisque la poutre 3 est fixée rigidement au châssis 10 de la manière décrite précédemment, l'effort vertical est supporté entièrement entre la poulie de renvoi 30 et la poulie de guidage 17 ou le cabestan 14. Ainsi tous les efforts de traction sont entièrement absorbés par les moyens d'appui 33, la poutre 3 et le châssis 10, faisant qu'il n'est pas nécessaire d'arrimer spécialement le dispositif 1 au-dessus du sol.

La poutre 3 a été décrite et représentée ici comme étant de section essentiellement quadrangulaire, toute autre forme idoine peut aussi être choisie, par exemple une section circulaire ou alors un rail en T ou en I, la forme de l'étrier 18 étant à adapter en conséquence. De même plutôt que d'avoir plusieurs poutres de longueurs différentes pour s'adapter à la profondeur de la conduite, il est possible que des rallonges soient disposées sur la poutre afin de l'amener à la longueur souhaitée.

De manière préférentielle, l'étrier 32 portant la poule de renvoi 30 est monté sur un axe vertical 35, pivotant, de manière à pouvoir orienter la poulie 30 en face de l'extrémité de la conduite 21. Ce réglage de position est généralement réalisé avant la mise en place des moyens d'appui 33. De manière avantageuse, l'axe de la poule 30 est muni d'un amortisseur 36, connu de la technique, afin d'amortir les à-coups transmis au câble 13 par l'objet qu'il tire à travers la conduite 21; cette précaution est particulièrement avantageuse dans le cas où l'objet tiré est un marteau pneumatique faisant éclater la conduite 21.

Généralement l'extrémité de la conduite 21 ne débouche pas dans la chambre selon un axe aligné sur un axe vertical passant par le centre du regard 20 au sol. Il est alors nécessaire de mettre la poutre 3 de biais, de manière à ce que la poulie 30 soit en face de l'extrémité de la conduite alors que l'autre extrémité de la poutre sorte par le regard 20. Vu la forte fixation de la poutre 3 à l'étrier de fixation 18 ainsi que l'appartenance de ce dernier au châssis 10, cette fixation est suffisamment solide pour s'accommoder des efforts de torsion qui lui sont alors appliqués. Le réglage du biais de la poutre est facilement obtenu en orientant le châssis 10 à l'aide des moyens de réglage en hauteur des pieds 11, dans le cas considéré, par les manivelles 11A. On peut ainsi facilement obtenir une variation d'angle de ± 15 ° autour de la verticale de la poutre 3. En agissant sur les trois manivelles 11A, on peut donc faire parcourir à la poutre 3 une surface enveloppant un cône d'axe vertical et d'angle au sommet de 30°. Cette possibilité permet d'atteindre facilement l'extrémité d'une conduite fortement décentrée. On remarque en outre sur la figure que les deux bras du châssis 10 supportant les deux pieds 11 les plus proches du regard 20 sont légèrement coudés afin de décaler le dispositif de traction légèrement en arrière du regard et de laisser le maximum de place libre au-dessus de ce dernier.

Un tableau de commande 19, relié par des conduites non représentées d'une part à une unité de puissance hydraulique et d'autre part au moteur 15, permet la conduite du dispositif. De manière avantageuse ce tableau de commande peut être placé en divers points de réception du châssis 10 afin d'être facilement accessible à l'opérateur, quelle que soit la conformation du chantier.

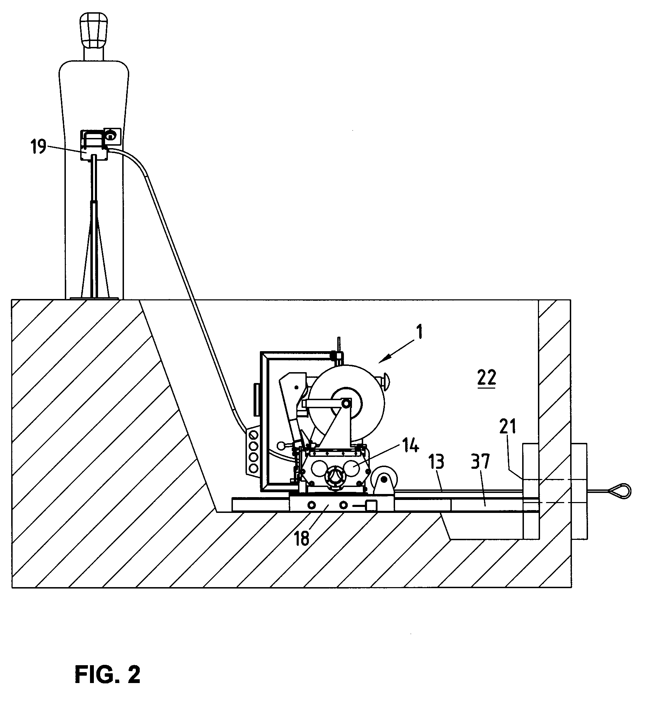

De par la fixation de la poutre 3 directement sur le châssis 10 comme décrit plus haut, il a été possible de fortement réduire les dimensions du châssis 10, respectivement du dispositif de traction. Ceci permet une autre utilisation avantageuse dudit dispositif, comme représenté à la figure 2.

Sur cette figure on a une vue en coupe d'une chambre 22 ou d'une fouille disposée à l'extrémité d'une conduite 21. De par les dimensions réduites du dispositif de traction 1, cette chambre ou fouille 22 peut être de dimensions nettement plus faibles qu'une même chambre ou fouille nécessaire pour un tirage avec un dispositif de traction selon l'art antérieur, notamment un dispositif de traction monté sur une remorque. Le dispositif de traction comporte ici essentiellement les mêmes éléments que décrits précédemment, à l'exception des pieds 11 et de leurs supports qui ont été décrochés du châssis 10. Le dispositif de traction 1 a été couché de 90°, de manière à ce que l'entrée du câble 13 sur le cabestan 14 soit directement alignée sur la conduite 21. Des moyens d'appui 37 sont engagés dans le même étrier de fixation 18 que décrit précédemment, qui maintenant est horizontal. Ainsi l'effort de traction est transmis par les moyens d'appui 37, en appui d'un côté sur une bordure stable de la conduite 21, directement au châssis 10 via l'étrier 18. La fixation des moyens d'appui dans l'étrier 18 se fait de la même manière que décrite plus haut relativement à la fixation de la poutre. Dans le cas représenté, le tableau de commande 19 a été disposé en un endroit où il est facile de contrôler le déroulement du tirage.

Le dispositif de tirage 1 a été décrit comme comprenant un tambour 12 et un cabestan double 14. Tous les autres moyens permettant d'obtenir l'effet de traction désiré peuvent être utilisés. En particulier le tambour pourrait directement servir d'organe de traction et l'on pourrait alors se passer du cabestan. A l'opposé, si tout l'effort de traction est appliqué par le cabestan, que ce soit un cabestan simple ou double, et que le câble n'est plus soumis à une forte traction entre le cabestan et le tambour, il serait possible de n'équiper le dispositif 1 que du cabestan, le tambour faisant partie d'un dispositif d'enroulement séparé. Cette dernière possibilité serait avantageuse dans le cas où il serait nécessaire de diminuer encore l'encombrement du dispositif de traction, le dispositif d'enroulement pouvant être déporté, notamment dans le cas où de grandes longueurs de câble sont à tirer.

Bien que le dispositif ait été décrit pour être utilisé lors du tirage d'un câble de traction auquel un objet ou un outil est attaché, le même dispositif peut évidemment aussi être utilisé pour la pose de câbles, notamment de câbles électriques, ou de conduites.

## Revendications

1. Dispositif de tirage (1) d'un câble de traction (13) constitué d'un châssis (10) supportant un moyen de traction (14) dudit câble, caractérisé en ce qu'il comporte un moyen de fixation (18) d'un organe d'absorption de l'effort de traction (3; 37), ledit moyen de fixation (18) faisant partie intégrante dudit châssis (10).

2. Dispositif selon la revendication 1, caractérisé en ce que le moyen d'absorption (3;37) peut être fixé selon plusieurs positions décalées longitudinalement dans ledit moyen de fixation (18).

3. Dispositif selon la revendication 2, caractérisé en ce que le moyen de fixation est un étrier (18) entourant au moins partiellement ledit moyen d'absorption.

4. Dispositif selon la revendication 3, caractérisé en ce que le moyen d'absorption est une poutre (3) munie d'une poulie de renvoi (30) à son extrémité éloignée de sa fixation dans l'étrier (18).

5. Dispositif selon la revendication 3, caractérisé en ce que le moyen d'absorption est un moyen d'appui (37) dont l'extrémité éloignée de sa fixation dans l'étrier (18) vient en appui sur une portion entourant une conduite (21) dans laquelle le câble est à tirer.

6. Dispositif selon la revendication 4, caractérisé en ce que l'extrémité de la poutre (3) munie de la poulie de renvoi (30) comprend des moyens de fixation (32) d'un organe d'appui (33) venant en appui sur une portion entourant une conduite (21) dans laquelle le câble est à tirer.

7. Dispositif selon l'une des revendications 4 ou 6, caractérisé en ce que la poule de renvoi (30) est montée en pivotement sur un axe (35) perpendiculaire à son axe de rotation et parallèle à l'axe longitudinal de la poutre (3).

8. Dispositif selon la revendication 7, caractérisé en ce que la poule de renvoi (30) est munie d'un amortisseur de chocs (36).

9. Dispositif selon l'une des revendications précédentes, caractérisé en ce que le moyen de traction du câble comporte un cabestan (14).

10. Dispositif selon la revendication 9, caractérisé en ce qu'il comporte en outre un tambour (12) d'enroulement du câble tiré.

11. Dispositif selon l'une des revendications 1 à 8, caractérisé en ce que le moyen de traction du câble est un tambour (12).

12. Dispositif selon la revendication 4, caractérisé en ce qu'il comporte en outre des moyens de réglage en hauteur (11,11A) dudit châssis (10), lesdits moyens de réglage en hauteur étant aptes à être utilisés pour une mise en biais de la poutre (3).

13. Dispositif selon l'une des revendications précédentes, caractérisé en ce qu'il comporte en outre des moyens de commande (19) desdits moyens de traction, lesdits moyens de commande étant aptes à être disposés de manière à ce que l'utilisateur puisse facilement surveiller l'opération de tirage.

14. Utilisation d'un dispositif selon la revendication 12, pour un tirage d'un câble (13) à travers une conduite souterraine (21), ledit dispositif étant placé au-dessus du niveau du sol (2), en face d'un regard (20) de ladite conduite, la poule de renvoi (30) située à l'extrémité de la poutre (3) étant disposée en face de l'extrémité de ladite conduite (21).

15. Utilisation d'un dispositif selon la revendication 5 pour un tirage d'un câble (13) à travers une conduite souterraine (21), ledit dispositif étant placé directement en face de l'extrémité de ladite conduite.
